(19) Europäisches Patentamt
European Patent Office
Office européen des brevets

(11) Veröffentlichungsnummer: **0 001 148**
**B1**

(12) # EUROPÄISCHE PATENTSCHRIFT

(45) Veröffentlichungstag der Patentschrift: **30.09.81**

(51) Int. Cl.³: **C 03 C 17/32**, B 65 D 23/08

(21) Anmeldenummer: **78200172.1**

(22) Anmeldetag: **05.09.78**

(54) **Verfahren zum Beschichten von Glasoberflächen.**

(30) Priorität: **07.09.77 DE 2740253**
**12.07.78 DE 2830590**

(43) Veröffentlichungstag der Anmeldung:
**21.03.79 Patentblatt 79/06**

(45) Bekanntmachung des Hinweises auf die Patenterteilung:
**30.09.81 Patentblatt 81/39**

(84) Benannte Vertragsstaaten:
**BE CH DE FR GB LU NL SE**

(56) Entgegenhaltungen:
**DE - A - 2 364 157**
**DE - A - 2 510 734**
**DE - A - 2 636 157**

(73) Patentinhaber: **CHEMISCHE WERKE HÜLS AG**
**Postfach 1320**
**D-4370 Marl 1 (DE)**

(72) Erfinder: **Dörmann, Günter**
**Händelstrasse 59**
**D-4630 Bochum (DE)**
Erfinder: **Gras, Rainer, Dr.**
**An der Ziegelei 91**
**D-4690 Herne 2 (DE)**
Erfinder: **Obendorf, Johann, Dr.**
**Pastorsbusch 40**
**D-4270 Dorsten (DE)**
Erfinder: **Wolf, Elmar, Dr.**
**Am Böckenbusch 3a**
**D-4690 Herne 2 (DE)**

(74) Vertreter: **Steil, Hanna, Dipl.-Chem., et al**
**RSP PATENTE-PB 40 Holsterhauser Strasse 160**
**Postfach 2840**
**D-4690 Herne 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 148 B1

Verfahren zum Beschichten von Glasoberflächen

Das Überziehen von Glasoberflächen, insbesondere Glasflaschen, mit einer festhaftenden, einheitlichen und transparenten Kunststoffschicht verleiht diesen Flaschen beim Einsatz für kohlensäurehaltige Getränke, wie Mineralwasser, Bier, Fruchtsaftgetränke u.a., eine außerordentliche Sicherheit und verlängert bei der Mehrwegflasche die Gebrauchsdauer. Infolge Schlag- und Stoßeinwirkung, aber auch durch Erhitzen im Sonnenlicht oder anderer Wärmequellen, ist es nämlich in der Vergangenheit häufig zu Explosionen ungeschützter Flaschen gekommen, die verschiedentlich schwere körperliche Verletzungen, insbesondere Augenverletzungen, bei Menschen verursacht haben.

Einige der bisher bekannten Beschichtungen für diesen Zweck besitzen den Nachteil, daß sich die Überzugsschicht bei wiederholter Reinigung eintrübt, was bei der Verwendung von thermoplastischen Materialien möglicherweise auf einen Nachkristallisationseffekt des Kunststoffs zurückzuführen ist. Derartige Flaschen vermitteln einen negativen optischen Eindruck und sind daher verkaufspsychologisch unerwünscht. Verschiedene Überzugsmaterialien besitzen den Nachteil der Oxidationsanfälligkeit, was zu einem Verspröden der Schutzschicht führt und somit, insbesondere bei Mehrwegflaschen, nach einiger Zeit zum Verlust des Splitterschutzes führt.

Es wurde nun gefunden, daß man Glasoberflächen auch ohne diese und andere Nachteile bei gleichzeitig guten handling-Eigenschaften beschichten kann, wenn man das Verfahren zum Beschichten insbesondere von Glasflaschen zur Verhinderung der Streuung von Glaspartikeln beim Bersten mit einer transparenten, duroplatischen Schutzschicht von vorzugsweise mehr als 50 $\mu$m durch Auftragen von Massen aus hydroxylgruppenhaltigen 1,2 Epoxidverbindungen mit mindestens einer 1,2-Epoxidgruppe im Molekül und einem unteren Aufschmelzpunkt von >40°C und Härtern sowie Verarbeitungszusätzen und Aushärten des Überzugs bei erhöhten Temperaturen so ausführt, daß man zunächst die reinen Glasoberflächen mit einer wässrigen oder alkoholischen Silanschlichte behandelt, die Glasflächen gegebenenfalls trocknet und anschließend auf eine Temperatur bis zu 120°C erwärmt, die Masse auf bekannte Weise auf die so behandelten Glasflächen aufträgt, wobei man als Härter mit cyclischen Amidinen der allgemeinen Formel

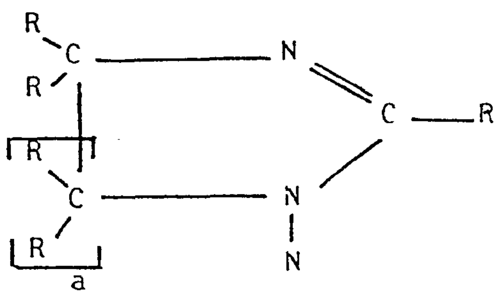

blockierte Polyisocyanate verwendet, worin a 1 oder 2, R gleiche oder verschiedene Substituenten aus der Gruppe Wasserstoff, Alkyl-, Cycloalkyl-, Aralkyl- und Arylrest und gegebenenfalls 2 geminale oder vicinale R's gemeinsam Bestandteil eines un- oder alkyl-substituierten Cycloalkylringes sind, das Härtungsmittel in Mengen von 2—15 Gew.%, bezogen auf die Menge an 1,2-Epoxidverbindung, einsetzt und die Überzugsmasse unter weiterer Wärmezufuhr aushärtet. Das mit cyclischen Amidinen blockierte Polyisocyanat kann im Falle der Diisocyanate durch die folgende allgemeine Formel

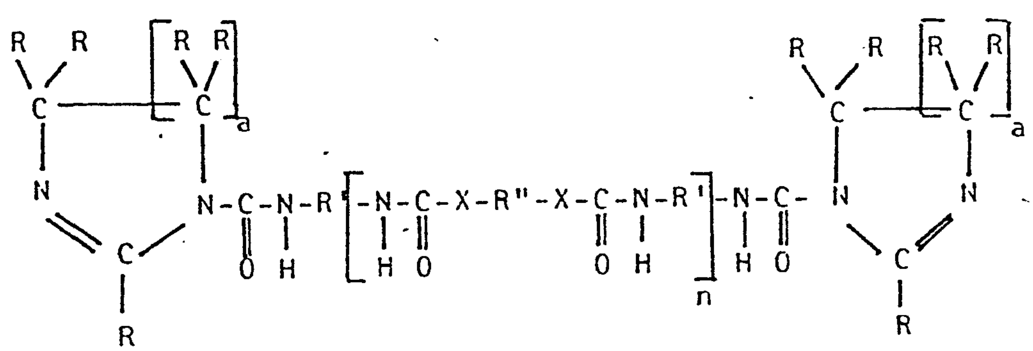

beschrieben werden, worin a und R die vorstehende Bedeutung haben, n 0 oder 1, X Sauerstoff, Schwefel oder eine NH-Gruppe, R' ein gleicher oder verschiedener, gegebenenfalls alkylsubstituierter

Alkylen-, Cycloalkylen- oder Arylenrest und R'' ein gegebenenfalls durch einen oder mehrere Alkylreste, wobei mehrere auch gemeinsam Bestandteil eines cycloaliphatischen Ringes sein können, substituierter, gesättigter oder ungesättigter Alkylenrest mit 2—18 C-Atomen, der gegebenenfalls ein oder mehrere Sauerstoff- oder Schwefelatome in der Kohlenwasserstoffkette enthält, oder ein gegebenenfalls alkylsubstituierter Aryl- oder Cycloalkylenrest sein kann.

Die erfindungsgemäßen Härter sind mit den meisten Epoxidharzen ausgezeichnet verträglich und liefern bei erhöhten Temperaturen homogene Schmelzen, die sehr gut zur Herstellung von Überzugsmassen geeignet sind. Die erfindungsgemäßen härtbaren Gemische sind bei Zimmertemperatur lagerstabil; die Aushärtungszeiten liegen je nach angewendeter Härtungstemperatur im Bereich von 5—25 Minuten. Der Härtungsmechanismus ist mutmaßlich komplex. Einmal wird die Homopolymerisation der 1,2-Epoxidgruppen durch den basischen N der erfindungsgemäßen Verbindungen katalysiert, zum anderen erfolgt bei der Härtung eine Deblockierung der Härter in die cyclischen Amidine und die Polyisocyanate. Das in Freiheit gesetzte Amidin katalysiert wiederum die Homopolymerisation der 1,2-Epoxidgruppen, während die freigewordenen NCO-Gruppen mit den OH-Gruppen des Epoxidharzes über eine NCO/OH-Reaktion unter Bildung von Urethanbindungen reagieren. Auch darf die Oxazolidinon-Bildung durch Reaktion von NCO-Gruppen mit Epoxidgruppen nicht vernachlässigt werden. Die gehärteten Überzüge bzw. Beschichtungen zeichnen sich durch sehr gute chemische und mechanische Eigenschaften aus.

Aus DE - A - 2 510 734 sind zwar Überzugsmassen für glasflaschen aus 1,2-Epoxidverbindungen bekannt aber dabei werden nur die Epoxidgruppen durch Amidine gehärtet und es wird keine Vernetzung, wie bei dem erfindungsgemäßen verfahren, erreicht.

Zur Herstellung der erfindungsgemäßen Gemische, die als Überzugsmassen Verwendung finden sollen, eignen sich besonders hydroxylgruppenhaltige 1,2-Epoxidverbindungen mit mehr als einer 1,2-Epoxidgruppe im Molekül und einem unteren Aufschmelzpunkt von >40°C, also Verbindungen, die diesen Charakteristika entsprechen, sind einmal Polyepoxidverbindungen, die bei 40°C und darunter fest sind, wobei darunter höhermolekulare Verbindungen (sogenannte Festharze) fallen, und solche, die infolge ihres symmetrischen Aufbaus bzw. der Größe der an die 1,2-Epoxidgruppe gebundenen Kohlenstoffsysteme fest sind und zum anderen solche, die durch Reaktion von flüssigen 1,2-Epoxidverbindungen mit mehr als einer Epoxidgruppe pro Molekül mit primären oder sekundären Aminen in solcher Menge hergestellt worden sind, daß das Addukt mindestens im Durchschnitt noch mehr als eine 1,2-Epoxidgruppe pro Molekül enthält.

Die 1,2-Epoxidverbindungen können sowohl gesättigt als auch ungesättigt sowie aliphatisch, cycloaliphatisch, aromatisch und heterocyclisch sein. Sie können weiterhin solche Substituenten enthalten, die unter den Mischungs- oder Reaktionsbedingungen keine störenden Nebenreaktionen verursachen. Keine Nebenreaktionen rufen Alkyl- oder Arylsubstituenten, Äthergruppierungen und ähnliche hervor.

Von den Festharzen werden für diesen Anwendungszweck 1,2-Epoxidverbindungen mit mehr als einer Epoxidgruppe im Molekül bevorzugt, deren Epoxyäquivalentgewicht zwischen 500—2000 liegt. Diese sind die festen, polymeren Polyglycidylpolyäther von 2,2-Bis-(4-hydroxyphenyl)-propan, die z.B. erhalten werden durch Reaktion von 2,2-Bis-(4-hydroxyphenyl)-propan mit Epichlorhydrin in Molverhältnissen von 1:1,9—1,2 (in Anwesenheit eines Alkalihydroxids im wässrigen Medium). Polymere Polyepoxide dieser Art können auch erhalten werden durch Umsetzung eines Polyglycidyläthers von 2,2-Bis-(4-hydroxyphenyl)-propan mit weniger als der äquimolekularen Menge an zweiwertigem Phenol, vorzugsweise in Anwesenheit eines Katalysators, wie eines tertiären Amins, eines tertiären Phosphins oder eines quaternären Phosphoniumsalzes. Das Polyepoxid kann auch ein fester, epoxidierter Polyester sein, der beispielsweise erhalten wurde durch Umsetzung eines mehrwertigen Alkohols und/oder einer mehrbasischen Carbonsäure bzw. deren Anhydrid mit einem niedermolekularen Polyepoxid. Beispiele für derartige Polyepoxide mit niedrigem Molekulargewicht sind flüssige Diglycidyläther des 2,2-Bis-(4-hydroxyphenyl)-propans, Diglycidylphthalats, Diglycidyladipats, Diglycidyltetrahydrophthalats, Diglycidylhexahydrophthalats, Diglycidylmaleats und des 3,4-Epoxycyclohexylmethylester der 3,4-Epoxycyclohexancarbonsäure.

Gemische aus festen Polyepoxiden können ebenfalls verwendet werden, z.B. ein Gemisch aus einem Polyepoxid, dessen Schmelzpunkt zwischen 120 und 160°C liegt, und einem Polyepoxid mit einem Schmelzpunkt zwischen 60 und 80°C (Schmelzpunkt wird bestimmt nach der Quecksilbermethode von Durrans). Geeignete Mischungen enthalten zwischen 30 und 50 Gew.% eines festen Polyglycidyläthers von 2,2-Bis-(4-hydroxyphenyl)-propan mit einem Epoxyäquivalentgewicht zwischen 1650 und 2050 und einem Schmelzpunkt von 120 bis 160°C und zwischen 50 und 70 Gew.% eines festen Polyglycidylpolyäthers von 2,2-Bis-(4-hydroxyphenyl)-propan mit einem Epoxyäquivalentgewicht zwischen 450 und 525 und einem Schmelzpunkt von 60 bis 80°C.

Die erfindungsgemäß verwendeten, mit cyclischen Amidinen der beschriebenen allgemeinen Formel blockierten Polyisocyanate können durch Umsetzung bei Temperaturen von 0—150°C, vorzugsweise bei 80—120°C, hergestellt werden, wobei die Polyisocyanate und die cyclischen Amidine in solchen Mengen eingesetzt werden, daß auf eine Isocyanatgruppe 0,5—1,1, vorzugsweise 0,8—1,0 Mol cyclisches Amidin kommen. Die angewendete Reaktionstemperatur sollte jedoch unterhalb der Aufspalttemperatur liegen.

Die Umsetzung kann sowohl in Lösungsmitteln, in der Schmelze als auch in im Überschuß vorgelegten Polyisocyanat durchgeführt werden.

Als Ausgangsverbindungen, die zur Blockierung mit den cyclischen Amidinen eingesetzt werden können, eignen sich beispielsweise Polyisocyanate, insbesondere Diisocyanate, wie aliphatische, cycloaliphatische, araliphatische, d.h. arylsubstituierte aliphatische, und/oder aromatische Diisocyanate, wie sie beispielsweise in Houben Weyl, Methoden der organischen Chemie, Band 14/2, Seite 61—70, und in dem Artikel von W. Siefken in Justus Liebigs Annalen der Chemie *562*, 75—136, beschrieben werden, wie 1,2-Äthylendiisocyanat, 1,4-Tetramethylendiisocyanat, 1,6-Hexamethylendiisocyanat, 2,2,4-bzw. 2,4,4-Trimethyl-1,6-hexamethylendiisocyanat (TMDI), 1,8-Diisocyanato-2,4-dimethyloctan, 1,9-Diisocyanato-5-methylnonan, 1,12-Dodecandiisocyanat, $\omega,\omega'$-Diisocyanatodipropyläther, Cyclobutan-1,3-diisocyanat, Cyclohexan-1,3- und 1,4-diisocyanat, 3-Isocyanatomethyl-3,5,5-trimethylcyclohexylisocyanat, welches auch als Isophorondiisocyanat bezeichnet und mit IPDI abgekürzt wird, 2,5- bzw. 2,6-Bis (isocyanatomethyl-)biscyclo-[2,2,1]-heptan, Decahydro-1,4-methano-naphthalin-2 (oder 3) 5-ylendimethylen-diisocyanat, Hexahydro-4-7-methanoindan-1- (oder 2) 5- (oder 6)-ylendimethylen-diisocyanat, Hexahydro-1,3- bzw. -1,4-phenylen-diisocyanat, 2,4- und 2,6-Hexahydrotoluylendiisocyanat, Perhydro-2,4' und/oder -4,4'-diphenyl-methan-diisocyanat, $\omega,\omega'$-Diisocyanato-1,4-diäthyl-benzol, 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyl-diphenyl, 4,4'-Diisocyanato-diphenylmethan Naphthylen-1,5-diisocyanat, Toluylendiisocyanate Toluylen-2,4- bzw. 2,6-diisocyanat, N,N'-(4,4'-Dimethyl-3,3'-diisocyanatodiphenyl)-uretdion, m-Xylylen-diisocyanat, aber auch die Triisocyanat, wie 2,4,4'-Triisocyanatodiphenyläther, 4,4',4''-Triisocyanato-triphenylmethan, Tris-(4-isocyanatophenyl) thiophosphat, sowie beliebige Gemische dieser Verbindungen. Weitere geeignete Isocyanate werden in dem genannten Artikel in den Annalen auf Seite 122 f beschrieben.

Besonders bevorzugt werden in der Regel die technisch leicht zugängigen aliphatischen oder cycloaliphatischen Diisocyanate und besonders das 1,6-hexamethylendiisocyanat, das 3-Isocyanatomethyl-3,5,5-trimethylcyclohexylisocyanat und 2,4-Hexahydrotoluylendiisocyanat sowie deren isomere Gemische.

Neben den monomeren Polyisocyanaten können Ausgangsstoffe für die Blockierung mit den nachstehend ausführlich beschriebenen cyclischen Amidinen, wie Imidazolinen und Tetrahydropyrimidinen, selbstverständlich auch die dimeren und trimeren Formen de Polyisocyanate, wie Uretdione, Biuret, Isocyanurate und Urethanaddukte, eingesetzt werden, die nach bekannten Methoden herstellbar sind.

Unter Polyisocyanaten im Sinne der vorliegenden Erfindung werden auch solche verstanden, die vor der Blockierung mit den cyclischen Amidinen einer Umsetzung zur Molekülvergrößerung mit den in der Isocyanatchemie gebraüchlichen sogenannten Kettenverlängerungsmitteln, wie Wasser, Polyolen, Polyaminen u.a., unterworfen wurden, wobei das bi- oder trifunktionelle Kettenverlängerungsmittel, also solche mit gegenüber Isocyanatgruppen reaktionsfähigen Gruppen, wie Hydroxyl- und/oder Aminogruppen-tragende Verbindungen, in solchen Mengen verwendet wird, daß das resultierende neue Isocyanat im Durchschnitt mindestens 2 Isocyanatgruppen trägt. Bei Verwendung von Wasser als Kettenverlängerungsmittel resultieren Polyisocyanate, mit einer oder mehreren Harnstoffgruppierungen.

Geeignete Polyole sind beispielsweise Diole und Triole, z.B. Äthylenglykol, Propylenglykole, wie 1,2- und 1,3-Propandiol, 2,2-Dimethylpropandiol-(1,3), Butandiole, wie Butandiol-(1,4), Hexandiole, z.B. Hexandiol-(1,6), 2,2,4-Trimethylhexandiol-(1,6), 2,4,4-Trimethylhexandiol-(1,6), Heptandiol-(1,7), Octadecen-9,10-diol-(1,12), Thiodiglykol, Octadecandiol-(1,18), 2,6-Dimethyl-2-propylheptandiol-(1,3, Buten- oder Butindiol-(1,4), Diäthylenglykol, Triäthylenglykol, trans- und cis-1,4-Cyclohexandimethanol, 1,4-Cyclohexandiol, Glycerin, Hexantriol-(1,2,6), 1,1,1-Trimethylolpropan, 1,1,1-Trimethyloläthan u.a. Es können auch Mischungen der vorgenannten Verbindungen verwendet werden.

Von den für die Kettenverlängerung bzw. Molekülvergrößerung geeigneten Polyaminen sollen beispielsweise das Äthylendiamin-1,2, Propylendiamin-1,2 und -1,3, Butylendiamin-1,2, -1,3 und 1,4 sowie die Hexamethylendiamine, die eine oder mehrere $C_1$—$C_4$-Alkylreste tragen können, wie 2,2,4-bzw. 2,4,4-Trimethylhexamethylendiamin-1,6 u.ä., und 3-Aminomethyl-3,5,5-trimethylcyclohexylamin, welches auch als IPD bezeichnet wird, genannt werden.

Die geeigneten Imidazolin- und Tetrahydropyrimidin-Derivate im Sinne der vorliegenden Erfindung, die der früher beschriebenen allgemeinen Formel entsprechen, sind beispielsweise solche mit gegebenenfalls arylsubstituierten Alkylresten oder mit gegebenenfalls alkylsubstituierten Arylresten, wie 2-Methylimidazolin, 2,4 - Dimethylimidazolin, 2 - Methyl - 4 - (n - butyl) - imidazolin, 2-Äthylimidazolin, 2 - Äthyl - 4 - methyl - imidazolin, 2 - Benzyl - imidazolin, 2 - Phenylimidazolin, 2-Phenyl - 4 - methyl - imidazolin, 2 - Phenyl - 4 - (N - morpholinylmethyl) - imidazolin, 2 - (o-Tolyl) - imidazolin, 2 - (p - Tolyl) - imidazolin bzw. 2 - Methyltetrahydropyrimidin, 2,4 - (5 oder 6), Dimethyltetrahydropyrimidin, 2 - Äthyltetrahydropyrimidin, 2 - Äthyl - 4 - methyl - tetrahydropyrimidin, 2 - Benzyltetrahydropyrimidin, 2 - Phenyl - tetrahydropyrimidin, 2 - Phenyl - 4(5 oder 6) -methyl - tetrahydropyrimidin, 2,4 - Diaza - 3 - phenyl - 7,9,9 - (oder 7,7,9) - trimethyl - bicyclo-

[4,3,0] - nonen - (2), 2,4 - Diaza - 3 - methyl - 7,9,9 - (oder 7,7,9) - trimethyl - bicyclo - [4,3,0]-nonen - (2) u.a.m. Es können auch Gemische dieser cyclischen Amidine erfindungsgemäß eingesetzt werden. Dieses ist besonders dann zweckmäßig, wenn blockierte Isocyanate mit niedrigen Schmelzpunkten bzw. -bereichen benötigt werden.

Die erfindungsgemäß einsetzbaren Imidazolin- und Tetrahydropyrimidin-Derivate können nach bekannten Verfahren aus gegebenenfalls substituierten 1,2- bzw. 1,3-Diaminen und beispielsweise aliphatischen oder aromatischen Mononitrilen in Gegenwart von elementarem Schwefel oder Sulfurylchlorid als Katalysator hergestellt werden.

Die Blockierung kann, wie bereits erwähnt, auch in Lösungsmitteln durchgeführt werden. Als Lösungsmittel für diese Reaktion kommen nur solche infrage, die mit den Polyisocyanaten nicht reagieren, beispielsweise Ketone, wie Aceton, Methyläthylketon, Methylisobutylketon, Cyclopentanon, Cyclohexanon u.a.; Aromaten, wie Benzol, Toluol, Xylole, Chlorbenzol, Nitrobenzol u.a.; cyclische Äther, wie Tetrahydrofuran, Dioxan u.a.; Ester, wie Methylacetat, n-Butylacetat u.a.; aliphatische Chlorkohlenwasserstoffe wie Chloroform, Tetrachlorkohlenstoff u.a. sowie aprotische Lösungsmittel, wie Dimethylformamid, Dimethylacetamid, Dimethylsulfoxid usw.

Wenn das Blockierungsmittel im Verhältnis von $\geqq 1$ zur Anzahl der Isocyanatgruppen eingesetzt wird, werden die Reaktionsmischungen so lange bei den angegebenen Temperaturen gehalten, bis der NCO-Gehalt der Reaktionsmischung auf Werte unter 0,2% NCO abgesunken ist, ansonsten für $<1$ bis zur Erreichung eines konstanten NCO-Wertes.

Ebenfalls erfindungsgemäß einsetzbar sind solche blockierten Polyisocyanate, die durch nachträgliche Umsetzung einer Gruppe von blockierten Polyisocyanaten erhalten werden können, nämlich solche, bei denen cyclische Amidine in unterstöchiometrischen Mengen eingesetzt worden sind, d.h. das Verhältnis cyclisches Amidin zu Isocyanatgruppen war $<1:1$, mit den gleichen Kettenverlängerungsmitteln, die bereits früher als Mittel zur Molekülvergrößerung beschrieben worden sind. Die Umsetzung erfolgt ebenfalls bei Temperaturen im Bereich von 0—160°C, verzugsweise 80—140°C, jedoch unterhalb der Deblockierungstemperatur des blockierten Polyisocyanats. Durch diese blockierten Polyisocyanate lassen sich Überzugsmittel herstellen, die in sehr weiten Grenzen praktische Erfordernisse abdecken. Diese Verfahrensvariante ist besonders von Interesse für Polyisocyanate mit unterschiedlich reaktiven NCO-Gruppen.

So lassen sich durch Wechsel der Reihenfolge Adduktbildung/Blockierung blockierte Polyisocyanate mit unterschiedlicher Reaktivität, Schmelzbereich und Struktur erhalten.

Die Menge des als Härtungsmittel eingesetzten, mit einem cyclischen Amidin blockierten Polyisocyanats kann bemerkenswerterweise in weiten Grenzen variiert werden. Man erhält bereits ausgezeichnete Resultate bei Verwendung von 2—15 Gew.-Teilen, vorzugsweise 6—12 Gew.T., Härtungsmittel, bezogen auf die Menge der eingesetzten festen 1,2-Epoxidverbindung. Höhere Zusätze sind aus praktischen und wirtschaftlichen Gründen unzweckmäßig.

Bei Anwendung von gemischt-blockierten Polyisocyanaten, d.h. sowohl mit Imidazolinen als auch mit Tetrahydropyrimidinen blockierten, können diese durch Vermischen der Einzelbestandteil als auch durch Blockierung mit Gemischen cylischer Amidine hergestellt werden. Bei gemischt-blockierten Polyisocyanaten sollte mindestens 1 Gew.% der jeweils 2. Komponente mitenthalten sein.

Zur Verbesserung der Verlaufeigenschaften der Überzugsmassen werden bei der Zubereitung sogenannte Verlaufmittel zugesetzt. Bei diesen Mitteln kann es sich um chemische Verbindungen bzw. deren Gemische sehr unterschiedlicher chemischer Art handeln, z.B. polymere oder monomere Verbindungen, Acetale, wie
Polyvinylformal, Polyvinylacetal, Polyvinylbutryal,
Polyvinylacetobutyral bzw.
Di-2-äthylhexyl-i-butyraldehyd-acetal,
Di-2-äthylhexyl-n-butyraldehyd-acetal,
Diäthyl-2-äthylhexanol-acetal,
Di-n-butyl-2-äthyl-hexanol-acetal,
Di-i-butyl-2-äthylhexanol-acetal,
Di-2-äthylhexyl-acetaldehyd-actal u.ä.,
Äther, wie die polymeren Polyäthylen- und Polypropylenglykole, Mischpolymerisate aus n-Butylacrylat und Vinylisobutyläther, Keton-Aldehyd-Kondensationsharze, feste Siliconharze oder auch Gemische von Zinkseifen, von Fettsäuren und aromatischen Carbonsäuren u.ä. Auch werden für diesen Zweck im Handel Produkte, wie Modaflow®, angeboten, deren chemischer Charakter den Verbrauchern unbekannt ist und von dem lediglich bekannt ist, daß es sich um eine komplexe, polymere, wirksame Flüssigkeit handelt.

Derartige Verlaufmittel können in den Ansätzen in Mengen von 0,2—5,0 Gew.%, bezogen auf die Gesamtmenge der Überzugsmasse, enthalten sein.

Die anderen Bestandteile der heißhärtbaren Überzugsmasse, wie Pigmente, lösliche Farbstoffe, Füllstoffe, Thixotropiermittel, UV- und Oxidationsstabilisatoren u.a. können, bezogen auf die Menge an 1,2-Epoxidverbindungen, innerhalb eines weiten Bereichs schwanken. Die zugesetzte Menge orientiert sich auch an den Anforderungen an die Qualität der Überzüge.

Die Herstellung der Überzugsmasse erfolgt, indem man die festen 1,2-Epoxidverbindungen und

die Härtungsmittel, gegebenenfalls nach Zugabe der genannten Lackzusätze, in den genannten Mengenverhältnissen mischt und mindestens 30°C unterhalb der Aufspalttemperatur des Härtungsmittels extrudiert und anschließend bei Einsatz als Pulverlack auf eine Korngröße kleiner als 0,25 mm, vorzugsweise $<100\ \mu$, und einem Korngrößenmaximum zwischen 20 und 60 $\mu$, vorzugsweise zwischen 30 und 50$\mu$, mahlt und gegebenenfalls die größere Fraktion durch Siebung entfernt.

Zur Durchführung des erfindungsgemäßen Verfahrens wird die gereinigte Glasflasche zunächst mit einer wässrigen oder alkoholischen Silanschlichte behandelt. Für die Behandlung werden Silane mit Resten verwendet, die zwei verschiedenen Funktionstypen zuzuordnen sind Dieses sind erstens niedere Alkoxyreste, insbesondere Methoxy- und Äthoxyreste, die mit OH-Gruppen der Glasoberfläche reagieren und zweitens organische Reste mit solchen funktionellen Gruppen, die entweder mit den 1,2-Expoxidverbindungen, wie Aminogruppen, oder mit dem Härter reagieren können, z.B. Epoxidgruppen, Glycidylreste u.ä., wie $\gamma$-Aminopropyl-trimethoxy-silan, $\gamma$-Aminopropyl-triäthoxy-silan, Glycidyloxypropyl-trimethoxy-silan, Glycidyloxy-propyl-triäthoxy-silan etc. Es können auch Mischungen mit gleichartigen funktionellen Resten verwendet werden, d.h. Mischungen solcher mit Epoxidgruppen, reaktiven Gruppen oder solche mit den Härtern reagierenden Gruppen. Die Behandlung der Glasflaschen kann beispielsweise durch Tauchen oder Besprühen mit dem Schlichtemittel erfolgen. Die so behandelten Flaschen können dann anschließend separat getrocknet werden. Auch kann die Trocknung gleichzeitig durch das Erwärmen der Flasche auf eine Temperatur bis zu 120°C erfolgen, d.h. auf eine Temperatur, wie sie bei der Flaschenherstellung im Laufe des Abkühlprozesses auftritt.

Die Aufbringung der vorstehend beschriebenen Überzugsmasse auf die erwärmten Glasflaschen

Die Aufbringung der vorstehend beschriebenen Überzugsmasse auf die erwärmten Glas-claschen geschieht nach bekannten Methoden, z.B. bei Pulverlacken durch elektrostatisches Pulverspritzen, durch Wirbelsintern oder elektrostatisches Wirbelsintern etc. oder bei Schmelzen beispielsweise durch Bewickeln der rotierenden Flasche mit dem Schmelzfilm. Die angewandte Aufbringungsmethode ist von dem zu überziehenden Glaskörper abhängig.

Das sofortige Schmelzen des im Schmelzbereich von ca. 100°C liegenden Pulvers bewirkt den ausgezeichneten, transparenten Verlauf des Filmes.

Nach dem Aufbringen der Überzugsmasse nach einer der beschriebenen Methoden auf die zu lackierenden Glasoberflächen werden sie zur Aushärtung auf Temperaturen von 120—200°C, vorzugsweise 140—180°C, erhitzt. Danach besitzt der resultierende Überzug die beschriebenen Vorteile.

Die Schichtdicken der ausgehärteten Überzüge können je nach Beanspruchung der Gläser zwischen 50 und 250 $\mu$m eingestellt werden.

Die so aufgebrachte Schutzschicht ist hochelastisch und besitzt eine ausgezeichnete Haftung, so daß beim Glasbruch oder Zerplatzen der Flasche die Glassplitter nicht nach außen dringen können. Nach der Zerstörung der Glasflasche bleibt die Flaschenform voll erhalten. Die auftretende kinetische Energie wird durch Streckung und Erwärmung des Kunststoffüberzuges umgesetzt.

Von besonderem Vorteil ist die Beständigkeit der Beschichtung gegenüber heißen, alkalihaltigen Spüllaugen, in denen die Flaschen vor dem Abfüllen des Genußmittels gereinigt werden. Dieses trifft in besonderem Maße für Mehrwegflaschen zu, die vor jedem Füllvorgang einer intensiven Reinigung unterzogen werden.

Der Vorteil der erfindungsgemäßen Beschichtung liegt darin, daß auch nach wiederholtem Spülen in der heißen, alkalischen Waschlauge keine Aufweichung des Materials und kein Haftungsverlust auftritt. Auch optisch zeigen sich keine Veränderungen.

Die so beschichteten Glasflaschen können als Behälter für kohlensäurehaltige Getränke ohne Gefahr beim Zubruchgehen oder Zerplatzen verwendet werden.

Bei ihrem Einsatz als Mehrwegflaschen ist die Gebrauchsdauer einer beschichteten Flasche wesentlich länger als die der ungeschützten Flasche, die infolge der Bewegungsabläufe durch Gegeneinanderreiben von scharfen Kanten und Spülvorgängen in heißen Laugen oberflächenmäßig stark beansprucht bzw. leicht beschädigt werden.

Weiterer Gegenstand der Erfindung sind die erfindungsgemäß mit einer transparenten, duroplastischen Schutzschicht beschichteten Gläser, Glaskörper, wie Flaschen.

*Allgemeine Beschreibung der angewandten Methodik*

Unvergütete und reine Glasflaschen bzw. Glasplatten von 5 mm Stärke wurden zunächst mit wässriger oder alkoholischer $\gamma$-Amino-propyl-triäthoxy-silanlösung (1,5 Gew.%) bei Raumtemperatur mit einer etwa monomolekularen Schicht überzogen und anschließend getrocknet.

Die verwendeten 1,2-Epoxidverbindungen mit den speziellen Charakteristika, in der Praxis meist als Epoxidharz bezeichnet, wurden mit den sowohl als Vernetzer als auch als Härter wirkenden, mit cyclischen Amidinen blockierten Polyisocyanaten und dem Verlaufmittel in den angegebenen Gewichtsverhältnissen gemischt, extrudiert und anschließend gemahlen. Die Teilchengröße der Pulverbestandteile war $<100\ \mu$m. Die Häufigkeitsverteilung der Teilchengröße besaß im Bereich von 30—50 $\mu$m ihr Maximum. Diese feinkörnigen Gemische wurden dann durch elektrostatisches Pulverspritzen auf die vorgewärmten Glasflächen aufgebracht und anschließend bei den genannten Temperaturen und Zeiten ausgehärtet. Die Eigenschaften der erhaltenen Überzüge wurden durch die später beschriebenen Prüfungen ermittelt.

*Herstellung der blockierten Polyisocyanate*

A. (mit 2-Phenylimidazolin blockiertes IPDI)

Zu einer Mischung aus 222 Gew.-Teilen Isophorondiisocyanat (IPDI) und 300 Gew.-Teilen wasserfreiem Aceton wurden bei Raumtemperatur langsam 292 Gew.-Teile 2-Phenylimidazolin, die in 500 Gew.-Teilen wasserfreiem Aceton gelöst waren, zugetropft. Nach Beendigung der 2-Phenylimidazolin-Zugabe wurde eine Stunde bei 50°C erhitzt. Das Aceton wurde abdestilliert. Die letzten Reste an Aceton wurden durch Trocknung des Reaktionsproduktes bei 60°C im Vakuumtrockenschrank entfernt. Das mit 2-Phenylimidazolin blockierte IPDI stellt ein weißes Pulver mit einem Schmelzbereich von 98—106°C dar, einem Erweichungspunkt (DTA) von 63—80°C und einem Gehalt an freiem Isocyanat von 0,2%. Es besitzt weiter eine Aufspalttemperatur von ca. 120°C.

B. (mit 2-Phenylimidazolin blockiertes IPDI-Addukt)

*a.* Zu 444 Gew.-Teilen IPDI wurden bei 80°C unter guter Rührung 106 Gew.-Teile Diäthylenglykol langsam zugegeben. Nach erfolgter Diäthylenglykol-Zugabe wurde noch zwei Stunden bei 80°C erhitzt. Der NCO-Gehalt des IPDI/Diäthylenglykol-Gemisches betrug dann 15,1%.

*b.* Zu 556 Gew.-Teilen des unter *a.* hergestellten Adduktes aus 2 Molen IPDI und 1 Mol Diäthylenglykol wurden bei 120°C portionsweise 292 Gew.-Teile 2-Phenylimidazolin so zugegeben, daß die Temperatur nicht über 125°C anstieg. Nach Beendigung der 2-Phenylimidazolin-Zugabe wurde das Reaktionsgemisch noch eine Stunde bei 120°C erhitzt. Das Reaktionsprodukt ist ein blaßgelbes Pulver mit einem Schmelzbereich von 100—106°C, einem Erweichungspunkt (DTA) von 70—90°C und einem freien NCO-Gehalt von 0,2%. Die Aufspalttemperatur liegt bei ca. 140°C.

C. (mit 2-Phenyl-4-methylimidazolin blockiertes IPDI)

Zu einer Schmelze von 320 Gew.-Teilen 2-Phenyl-4-methyl-imidazolin wurden 222 Gew.-Teilie IPDI so zugetropft, daß die Temperatur im Reaktionskolben nicht über 120°C stieg. Zur Vervollständigung der Reaktion wurde die Reaktionsmischung 3 Stunden bei 120°C gehalten. Diese Bedingungen reichten für eine nahezu vollständige Umsetzung. Das Reaktionsprodukt ist ein weißes kristallines Pulver mit einem Schmelzbereich von 95—98°C, einem Erweichungspunkt (DTA) von 65—85°C und einem freien NCO-Gehalt von 0.2%. Die Aufspalttemperatur betrug ca. 140°C.

D. (mit 2,4-Dimethylimidazolin blockiertes IPDI)

Zu 222 Gew.-Teilen IPDI wurden bei 80°C 196 Gew.-Teile 2,4-Dimethylimidazolin so zugetropft, daß die Temperatur nicht über 90°C anstieg. Nach beendeter 2,4-Dimethylimidazolin-Zugabe wurde noch eine weitere Stunde bei 100°C erhitzt. Das Reaktionsprodukt ist ein farbloses Pulver mit einem Schmelzbereich von 104—110°C und einem Erweichungspunkt (DTA) von 75—90°C. Im Reaktionsprodukt konnte kein NCO mehr nachgewiesen werden. Die Aufspalttemperatur betrug ca. 160°C.

E. (mit 2,4-Dimethylidazolin blockiertes IPDI-Addukt)

Zu 556 Gew.-Teilen des unter *B.a.* beschriebenen Addukts aus 2 Molen IPDI und 1 Mol Diäthylenglykol wurden bei 100°C 196 Gew.-Teile 2,4-Dimethylimidazolin so zugetropft, daß die Temperatur nicht über 110°C anstieg. Nach erfolgter 2,4-Dimethylimidazolin-Zugabe wurde das Reaktionsgemisch noch weitere 2 Stunden bei 110°C erhitzt. In dem so hergestellten Reaktionsprodukt konnte kein NCO mehr nachgewiesen werden. Das Reaktionsprodukt ist ein farbloses Pulver mit einem Schmelzbereich von 100—107°C und einem Erweichungspunkt von 60—95°C. Die Aufspalttemperatur lag bei ca. 170°C.

F. (mit Verbindung Fa. (isomeres Tetrahydropyrimidingemisch aus TMCPD und Benzoesäureester) blockiertes IPDI)

a. 1547 Gew.-T. Benzoesäuremethylester wurden zu 3125 Gew.T eines Isomerengemisches aus 1-Amino-2-aminomethyl-3,3,5 bzw. -3,5-5-trimethyl-cyclopentan (TMCPD) in einen Reaktor eingefüllt und unter Rühren auf 190°C erhitzt. Es stellt sich ein Druck von ca. 9 bar ein. Das Reaktionsgemisch wurde 2,5 h bei dieser Temperatur gehalten. Anschließend wurde der Druck entspannt und Wasser abdestilliert. Durch Destillation im Ölpumpenvakuum (0,5 mbar) ließ sich im Temperaturbereich von 158—170°C ein Isomerengemisch verschiedener bicyclischer Tetrahydropyrimidine der folgenden Struktur isolieren (Verbindung F.a.)

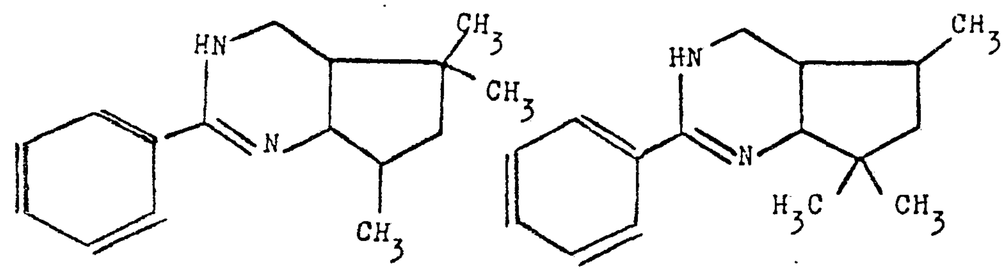

Das Produkt ist gelblich und hochviskos.
Ausbeute: 2120 Gew.-Teile ≙ 87% bezogen auf eingesetzten Ester.

*b.* Zu 222 Gew.T. Isophorondiisocyanat (IPDI) in 300 Gew.T. wasserfreiem Aceton wurden bei Raumtemperatur langsam 484 Gew.T. Verbindung F.a., die ebenfalls in 500 Gew.T. wasserfreiem Aceton gelöst waren, zugetropft. Nach beendeter Zugabe wurde 1 h bei 50°C erhitzt. Das Aceton wurde abdestilliert; die letzten Reste Aceton im Vakuumtrockenschrank bei 60°C entfernt. Das Reaktionsprodukt stellt ein weißes Pulver mit einem Schmelzbereich von 85—98°C dar, einem Erweichungspunkt (DTA) von 67—75°C und einem Gehalt an freiem NCO von 0,2%.

G. (mit Verbindung F.a. blockiertes IPDI-Addukt B.a.)

Zu 500 Gew.-Teilen des gemäß B.a. hergestellten Adduktes wurden bei 120°C portionsweise 484 Gew.T. Verbindung F.a. so zugegeben, daß die Temperatur nicht über 125°C anstieg. Nach beendeter Zugabe wurde das Reaktionsprodukt noch 2 h bei 120°C erhitzt. Das Reaktionsprodukt ist ein blaßgelbes Pulver mit einem Schmelzbereich von 89—101°C, einem Erweichungspunkt (DTA) von 75—86°C und einem freien NCO-Gehalt von 0,2%.

H. (mit Verbindung F.a. blockiertes TMDI)

Analog Beispiel F.b. wurde aus 210 Gew.T. 2,2,4- bzw. 2,4,4-Trimethylhexamethylendiisocyanat (TMDI) und 484 Gew.T. Verbindung F.a. bei 100°C das entsprechende Isocyanataddukt hergestellt. Schmelzbereich: 75—89°C, Erweichungspunkt (DTA): 52—75°C, NCO-Gehalt < 0.3%.

I. (mit isomeren Tetrahydropyrimidingemisch aus TMCPD und Essigester (Verbindung I.a.) blockiertes IPDI)

*a.* 216 g Essigsäureäthylester und 1248 g TMCPD-Isomerengemisch (Molverhältnis 1:4) wurden in einem Druckreaktor unter Rühren eingefüllt und 2,5 h bei 190°C und 6,5 umgesetzt. Nach Enterfernen des überschüssigen TMCPD's und der Abspaltprodukte durch Destillation ließ sich im Vakuum (0,5 mbar) bei 100—119°C ein Isomerengemisch mit Tetrahydropyrimidinstruktur isolieren.

Ausbeute: 274 g ≙ 76% d.Th.

Das hochviskose, zähflüssige Produkt ist gelblich gefärbt und enthält u.a. Verbindungen folgender Formel:

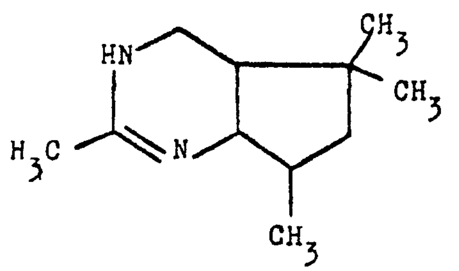

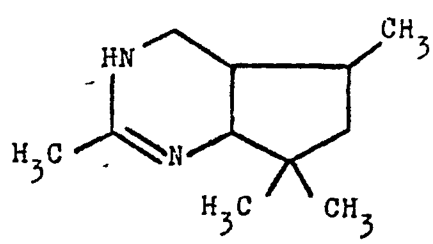

*b.* Zu 360 Gew.-Teilen der Verbindung I.a. wurden 222 Gew.T. IPDI so zugetropft, daß die Temperatur im Reaktionskolben nicht über 120°C stieg. Zur Vervollständigung der Reaktion wurde die Reaktionsmischung 3 h bei 120°C gehalten. Diese Bedingungen reichen für eine nahezu vollständige Umsetzung aus. Das Reaktionsprodukt ist ein gelbliches, kristallines Pulver mit einem Schmelzbereich von 95—104°C, einem Erweichungspunkt (DTA) von 58—74°C und einem freien NCO-Gehalt von < 0,3%.

## Beispiel 1

Das mit 2-Phenylimidazolin blockierte IPDI wurde mit dem angegebenen Epoxidharz sowie einem geringen Zusatz an Verlaufmittel in folgendem Verhältnis zu dem Beschichtungspulver verarbeitet:

Zusammensetzung des Beschichtungspulvers

| | | |
|---|---|---|
| Festes Epoxidharz auf der Basis eines Adduktes aus 2,2-Bis-(4-hydroxyphenyl)-propan (Dian) und Epichlorhydrin, welches einer HCl-Abspaltung unterworfen und anschließend mit weiterem Dian umgesetzt wurde und welches nach Angabe des Herstellers ein Epoxid-Äquivalentgewicht von 900—1000 besitzt, was einem Epoxidwert von 0,10—0,11 entspricht und einen Schmelzbereich von 90—100°C aufweist | : | 89,4 Gew% |
| 2-Phenylimidazolin blockiertes IPDI gemäß Beispiel A | : | 9,8 Gew.% |
| Verlaufmittel, welches im Handel unter der Bezeichnung Modaflow® erhältlich ist | : | 0,8 Gew.% |

Diese Formulierung wurde auf 200°C warme Glasflaschen aufgebracht und 5 Minuten bei 180°C gehärtet. An den beschichteten Flaschen wurden folgende Prüfungen vorgenommen:

| | | |
|---|---|---|
| *a.* Visuelle Beurteilung | : | Die Oberfläche zeigte ein blankes, glattes Aussehen. |
| *b.* Schichtstärke | : | 60—70 $\mu$m |
| *c.* Berstdruck | : | Die Flaschen zerplatzten bei einem Innendruck von 23—27 bar mit einem feinen Splitterbild.<br>Der Kunststoffmantel hielt die entstandenen Splitter vollständig zusammen. |
| *d.* Test in der Waschmaschine | : | Die Testwaschlauge bestand aus einer Calgonit ®*/Natriumhydroxidlösung (0,25/2,5 Gew.%) und wurde 5 Minuten bei 85°C auf die Flaschen einwirken gelassen. Die Gesamtzeit des Durchlaufes in der Waschmaschine betrug 30 Minuten. Der Kunststoff zeigte danach keine negativen Veränderungen. |
| *e.* Prüfung im Line Simulator Flaschentemperatur 80°C | : | Dabei wurden die Flaschen zunächst mit 80°C heißem Wasser gefüllt und dann 10 Minuten in ein Wasserbad mit einer Temperatur von 80°C gestellt. Anschließend wurden die erwärmten Flaschen 1 Minute im Line Simulator getestet. Im Bereich des Flaschenrumpfes waren nach dem Test keine Abriebstellen am Kunststoffüberzug festzustellen. |
| 5 x 1 Minute Laufzeit im Line Simulator | : | Dabei wurde der vorstehend erläuterte Test fünfmal wiederholt. Beschädigungen wurden nicht festgestellt. |
| *f.* Schlagprüfung (Splitterzusammenhalt) | : | Die Schlagprüfung wurde mit einer Schlagenergie von 73 kg cm durchgeführt. Hierbei fiel eine Stahlkugel von 80 mm Durchmesser aus 350 mm Fallhöhe auf die in einem Führungswinkel von 120° waagerecht liegende leere Flasche. Die Flaschen zerbrachen und wurden durch den Schlag deformiert, blieben jedoch als Ganzes erhalten, ohne daß Glassplitter nach außen drangen. |

*g.* Zur Beurteilung des Uberzugsmittels bei Stroßbeanspruchung wurde nach DIN 53 373 der "Durchstoßversuch mit elektronischer Meßwerterfassung" durchgeführt. Er ließ aufgrund seiner Ergebnisse die Flexibilität und Widerstandskraft einer Kunststoff-Folie erkennen.

Die Schichtstärken der Folien lagen zwischen 115 und 138 $\mu$m. Folgende Prüfeinstellungen wurden verwendet:

| | | |
|---|---|---|
| Probenform | : | Flachfolie |
| Maschine | : | Dynatester |
| Prüftemperatur | : | 24°C |
| Relative Luftfeuchtigkeit | : | 70% |
| Durchstoßkörper | : | Halbkugel |

Ergebnisse aus 10 Prüfungen:

| | | |
|---|---|---|
| Schädigungskraft $F_s$ | : | 139 N |
| Schädigungsarbeit $W_s$ | : | 26,2 Ncm |
| Durchstoßarbeit $W_{ges}$ | : | 39,3 Ncm |
| Schädigungsverformung $L_s$ | : | 5,08 mm |

*Calgonit® = Flaschenreinigungsmittel auf der Basis des Natriumsalzes eines Polyphosphats.

Beispiel 2

Mit 2-Phenylimidazolin blockiertes IPDI-Addukt gemäß Beispiel *B.b.* wurde mit dem angegebenen Epoxidharz sowie einem geringen Zusatz an Verlaufmittel in folgendem Verhältnis zu dem Beschichtungspulver verarbeitet:

Zusammenensetzung des Beschichtungspulvers

| | | |
|---|---|---|
| Festes Epoxidharz (gemäß Beispiel 1) | : | 90,0 Gew.% |
| 2-Phenylimidazolin blockiertes IPDI-Addukt | : | 9,2 Gew.% |
| Verlaufmittel (gemäß Beispiel 1) | : | 0,8 Gew.% |

Diese Formulierung wurde auf Glasflaschen aufgebracht, die im Augenblick des Auftrages eine Temperatur von ca. 240°C aufwiesen. Es erfolgte keine Nachhärtung.

Die Prüfungen der beschichteten Flaschen wurden, wie in Beispiel 1 erläutert, durchgeführt, wobei die Ergebnisse aus Beispiel 1 erhalten wurden.

Beispiel 3

Mit 2-Phenyl-4-methylimidazolin blockiertes IPDI gemäß Beispiel C wurde mit dem angegebenen Epoxidharz sowie einem geringen Zusatz an Verlaufmittel in folgendem Verhältnis zu dem Beschichtungspulver verarbeitet:

Zusammensetzung des Beschichtungspulvers

| | | |
|---|---|---|
| Festes Epoxidharz (wie unter Beispiel 1) | : | 89,3 Gew.% |
| 2-Phenyl-4-methylimidazolin blockiertes IPDI | : | 9,9 Gew.% |
| Verlaufmittel (gemäß Beispiel 1) | : | 0,8 Gew.% |

Diese Formulierung wurde auf Glasflaschen aufgebracht, die auf 200°C erhitzt worden waren. Es wurde keine Nachhärtung vorgenommen. Folgende Prüfungen wurden anschließend durchgeführt:

| | |
|---|---|
| *a.* Visuelle Beurteilung | Die Oberfläche zeigte ein blankes, glattes Aussehen. |
| *b.* Schichtstärke | 70—80 μm |
| *c.* Berstdruck | Die Flaschen zerplatzten bei einem Innendruck von 21—25 bar mit einem feinem Splitterbild.<br>Der Kunststoffüberzug hielt die Splitter zusammen. |
| *d.* Test in der Waschmaschine | Die Prüfung wurde gemäß Beispiel *1d* durchgeführt.<br>Nach der angegebenen Zeit zeigten sich auch hier keine negativen Veränderungen des Kunststoffes. |
| *e.* Prüfung im Line Simulator Prüfung gemäß Beispiel *1e* | Der Kunststoffüberzug zeigte nur geringe Abriebstellen. Nach 5 × 1 Minute Laufzeit wurden weitere Beschädigungen nicht festgestellt. |
| *f.* Schlagprüfung (Splitterzusammenhalt) Prüfung gem. Beispiel *1f* | Die Flaschen zerbrachen und wurden durch den Schlag deformiert, blieben jedoch als Ganzes erhalten |

Beispiel 4

Mit 2-Phenyl-4-methylimidazolin blockiertes IPDI/Diäthylenglykol-Addukt, hergestellt entsprechend Beispiel B, wurde mit dem angegebenen Epoxidharz sowie einem geringen Zusatz an Verlaufmittel in folgendem Verhältnis zu dem Beschichtungspulver verarbeitet. Das blockierte Polysiocyanat stellt ein weißes Pulver dar mit einem Schmelzbereich von 95—100°C, einer Glasumwandlungstemperatur (DTA) von 60—85°C und einer Aufspalttemperatur von ca. 150°C. Das Reaktionsprodukt war frei von unblockierten NCO-Gruppen.

Zusammensetzung des Beschichtungspulvers

| | | |
|---|---|---|
| Festes Epoxidharz (gemäß Beispiel 1) | : | 88,7 Gew.% |
| 2-Phenyl-4-methylimidazolin blockiertes IPDI/Diäthylenglykol-Addukt | : | 10,5 Gew.% |
| Verlaufmittel (gemäß Beipsiel 1) | : | 0,8 Gew.% |

Die Eigenschaften der beschichteten Glasflasche entsprachen denen des Beispiels 1.

Beispiel 5

Mit 2,4-Dimethylimidazolin blockiertes IPDI gemäß Beispiel D wurde mit dem angegebenen Epoxidharz sowie einem geringen Zusatz an Verlaufmittel in folgendem Verhältnis zu dem Beschichtungspulver verarbeitet:

Zusammensetzung des Beschichtungspulvers

| | | |
|---|---|---|
| Festes Epoxidharz (gemäß Beispiel 1) | : | 93,0 Gew.% |
| 2,4-Dimethylimidazolin blockiertes IPDI | : | 6,2 Gew.% |
| Verlaufmittel (gemäß Beispiel 1) | : | 0,8 Gew.% |

Die Eigenschaften der beschichteten Glasflasche entsprachen denen des Beispiels 1.

Beispiel 6

Mit 2,4-Dimethylimidazolin blockiertes IPDI/Diäthylenglykol-Addukt gemäß Beispiel E wurde mit dem angegebenen Epoxidharz sowie einem geringen Zusatz an Verlaufmittel in folgendem Verhältnis zu dem Beschichtungspulver verarbeitet:

Zusammensetzung des Beschichtungspulvers

| | | |
|---|---|---|
| Festes Epoxidharz (gemäß Beispiel 1) | : | 88,6 Gew.% |
| 2,4-Dimethylimidazolin blockiertes IPDI/Diäthylenglykol-Addukt | : | 10,6 Gew.% |
| Verlaufmittel (gemäß Beispiel 1) | : | 0,6 Gew.% |

Diese Formulierung wurde auf 120°C heiße Glasflaschen aufgetragen. Anschließend wurden diese Überzüge 10 Minuten bei 200°C gehärtet und folgenden Prüfungen unterworfen:

| | |
|---|---|
| *a.* Visuelle Beurteilung | Die Oberfläche zeigte ein blankes, glattes Aussehen. |
| *b.* Schichtstärke | 60—80 μm |
| *c.* Berstdruck | Die Flaschen zerplatzten bei einem Innendruck von 21—25 bar mit einem feinen Splitterbild. Der Kunststoffüberzug ließ keine Splitter nach außen dringen. |
| *d.* Test in der Waschmaschine | Prüfung gemäß Beispiel *1d.* Keine negativen Veränderungen nach der Testzeit. |
| *e.* Prüfung im Line Simulator Prüfung gem. Beispiel *1e* | Außer einigen leichten Abriebstellen war die Beschichtung vollkommen erhalten.<br>Nach 5 × 1 Minute Laufzeit zeigten sich keine weiteren Verletzungen der Kunststoffschicht. |
| *f.* Schlagprüfung (Splitterzusammenhalt) Prüfung gemäß Beispiel *1f* | Die Flaschen zerbrachen und wurden durch den Schlag deformiert, blieben jedoch als Ganzes erhalten. |

Beispiel 7

Das mit Verbindung F.a blockierte IPDI wurde mit dem unten beschriebenen Epoxidharz sowie einem geringen Zusatz an Verlaufmittel gemischt und zu einem Pulver verarbeitet.

Das eingesetzte feste Epoxidharz der im Beispiel 1 beschriebenen Herstellungsweise besaß ein Epoxidäquivalentgewicht von 900—1000, einen Epoxidwert von 0,10—0,11, einen Hydroxylwert von 0,34 und einen Schmelzbereich von 96—104°C.

Zusammensetzung des Beschichtungspulvers

| | | |
|---|---|---|
| Festes Epoxidharz obiger Art | : | 96,2 Gew.-% |
| Blockiertes IPDI gemäß Beispiel F.a. | : | 3,0 Gew.-% |
| Verlaufmittel (gemäß Beispiel 1) | : | 0,8 Gew.-% |

Diese Formulierung wurde auf 200°C warme Glasflaschen aufgebracht und 8 Minuten bei 180°C gehärtet. An den beschichteten Flaschen wurden die folgenden Prüfungen vorgenommen:

| | | |
|---|---|---|
| *a.* Visuelle Beurteilung | : | Die Oberfläche zeigte ein blankes, glattes Aussehen. |
| *b.* Schichtstärke | : | 50—80$\mu$m |
| *c.* Berstdruck | : | Die Flaschen zerplatzten bei einem Innendruck von 22—27,5 bar mit einem feinen Splitterbild. Der Kunststoffüberzug hielt die entstandenen Splitter vollständig zusammen. |
| *d.* Test in der Waschmaschine | : | Die unter 1d beschriebene Testwaschlauge wurde 5 Minuten bei 85°C auf die Flaschen einwirken gelassen. Die Gesamtzeit des Durchlaufes in der Waschmaschine betrug 30 Minuten. Der Überzug zeigte nach dem Test keine negativen Veränderungen. |
| *e.* Prüfung im Line Simulator Flaschentemperatur 80°C | : | Der im Beispiel 1 beschriebene Vorgang wurde durchgeführt. Im Bereich des Flaschenrumpfes konnten nach dem Test keine Abriebstellen am Überzug festgestellt werden. |
| 5 × 1 Minute Laufzeit im Line Simulator | | Dabei wurde der vorstehend erläuterte Test fünfmal wiederholt. Beschädigungen wurden nicht festgestellt. |
| *f.* Schlagprüfung (Splitterzusammenhalt) | : | Es wurde der im Beispiel 1 beschriebene Test durchgeführt. Die Flaschen zerbrachen und wurden durch den Schlag deformiert, blieben jedoch als Ganzes erhalten, ohne daß Glassplitter nach außen drangen. |

*g.* Zur Beurteilung des Überzugsmittels bei Stoßbeanspruchung wurde nach DIN 53 373 durchgeführt. Allgemeine Beschreibung des Testes im Beispiel 1.

Die Schichtstärken der Folien lagen zwischen 110 und 148 $\mu$m. Folgende Prüfeinstellungen wurden im Beispiel 1 erläutert.

Ergebnisse aus 10 Prüfungen:

| | | |
|---|---|---|
| Schädigungskraft $F_S$ | : | 138,5 N |
| Schädigungsarbeit $W_S$ | : | 24,8 Ncm |
| Durchstoßarbeit $W_{ges}$ | : | 40,7 Ncm |
| Schädigungsverformung $L_S$ | : | 4,99 mm |

Beispiel 8

Mit Verbindung F.a. blockiertes IPDI-Addukt gemäß Beispiel B.b. wurde mit Epoxidharz und Verlaufmittel vermischt und zu Beschichtungspulver verarbeitet.

Zusammensetzung des Beschichtungspulvers

| | | |
|---|---|---|
| Festes Epoxidharz (gemäß Beispiel 7) | : | 95,1 Gew.-% |
| Blockiertes IPDI-Addukt gemäß Beispiel G | : | 4,1 Gew.-% |
| Verlaufmittel entsprechend Beispiel 1 | : | 0,8 Gew.-% |

Diese Formulierung wurde auf Glasflaschen aufgebracht, die im Augenblick des Auftrages eine Temperatur von ca. 240°C aufwiesen. Es erfolgte keine Nachhärtung.

Die Prüfung der beschichteten Flaschen wurde, wie in Beispiel 1 erläutert, durchgeführt, wobei die Ergebnisse aus Beispiel 7 erhalten wurden.

Beispiel 9

Mit Verbindung F.a blockiertes TDMI gemäß Beispiel H wurde mit Epoxidharz und Verlaufmittel wie beschrieben vermischt und zu Beschichtungspulver verarbeitet:

Zusammensetzung des Beschichtungspulvers

| | | |
|---|---|---|
| Festes Epoxidharz (gemäß Beispiel 7) | : | 96 Gew.-% |
| Blockiertes TMDI entsprechend Beispiel H | : | 3,2 Gew.-% |
| Verlaufmittel entsprechend 1 | : | 0,8 Gew.-% |

Diese Formulierung wurde auf Glasflaschen aufgebracht, die auf 200°C erhitzt wurden. Es wurde keine Nachhärtung vorgenommen.

Die folgenden Prüfungen wurden anschließend durchgeführt:

| | | |
|---|---|---|
| *a.* Visuelle Beurteilung | : | Die Oberfläche zeigte ein blankes, glattes Aussehen. |
| *b.* Schichtstärke | : | 60—90 μm |
| *c.* Berstdruck | : | Die Flaschen zerplatzten bei einem Innendruck von 20—26 bar mit einem feinem Splitterbild. Der Kunststoffüberzug hielt die Splitter zusammen. |
| *d.* Test in der Waschmaschine | : | Die Prüfung wurde gemäß Beispiel *1* d durchgeführt. Nach der angegebenen Zeit zeigten sich auch hier keine negativen Veränderungen des Überzuges. |
| *e.* Prüfung im Line Simulator Prüfung gemäß Beispiel *1e* | : | Die Beschichtung zeigte nur geringe Abriebstellen. Nach 5 × 1 Minute Laufzeit wurden weitere Beschädigungen nicht festgestellt. |
| *f.* Schlagprüfung (Splitterzusammenhalt) Prüfung gem. Beispiel *1*f | : | Die Flaschen zerbrachen und wurden durch den Schlag deformiert, blieben jedoch als Ganzes erhalten. |

Beispiel 10

Mit Verbindung I.a. blockiertes IPDI, Epoxidharz und Verlaufmittel wurden wie beschrieben zu Beschichtungspulver verarbeitet:

Zusammensetzung des Beschichtungspulvers

Das gemäß I b beschriebene blockierte IPDI-Addukt wurde mit dem angegebenen Expoxidharz sowie einem geringen Zusatz an Verlaufmittel im folgenden Verhältnis zu dem Beschichtungspulver verarbeitet.

| | | |
|---|---|---|
| Festes Epoxidharz (gemäß Beispiel 7) | : | 90,7 Gew.-% |
| Blockiertes IPDI gemäß Beispiel Ib | : | 8,5 Gew.-% |
| Verlaufmittel gemäß Beispiel 1 | : | 0,8 Gew.-% |

Diese Formulierung wurde auf 120°C heiße Glasflaschen aufgetragen. Anschließend wurden diese Überzüge 10 Minuten bei 200°C gehärtet und folgenden Prüfungen unterworfen:

| | | |
|---|---|---|
| *a.* Visuelle Beurteilung | : | Die Oberfläche zeigte ein blankes, glattes Aussehen. |
| *b.* Schichtstärke | : | 65—90 $\mu$m |
| *c.* Berstdruck | : | Die Flaschen zerplatzten bei einem Innendruck von 20—25 bar mit einem feinen Splitterbild. Den Kunststoffüberzug ließ keine Splitter nach außen dringen. |
| *d.* Test in der Waschmaschine | : | Prüfung gemäß Beispiel *1*d. Keine negativen Veränderungen nach der Testzeit. |
| *e.* Prüfung im Line Simulator. Prüfung gem. Beispiel *1*e. | : | Außer einigen leichten Abriebstellen war die Beschichtung vollkommen erhalten. Nach 5 × 1 Minute Laufzeit zeigten sich keine weiteren Verletzungen der Kunststoffschicht. |
| *f.* Schlagprüfung (Splitterzusammenhalt) Prüfüng gemäß Beispiel *1*f | : | Die Flaschen zerbrachen und wurden durch den Schlag deformiert, blieben jedoch als Ganzes erhalten. |

Anstelle der in den Beispielen 7—10 als Blockierungsmittel verwendeten Tetrahydropyrimidine können auch andere, wie die vorstehend genannten, für diesen Zweck eingesetzt werden.

**Patentansprüche**

1. Verfahren zum Beschichten von Glasoberflächen, insbesondere Glasflaschen, zur Verhinderung der Streuung von Glaspartikeln mit einer transparenten, duroplastischen Schutzschicht durch Auftragen von Massen aus hydroxylgruppenhaltigen 1,2-Epoxidverbindungen, mit mindestens einer 1,2-Epoxidgruppe im Molekül und einem unteren Aufschmelzpunkt von >40°C, und Härtern sowie Verarbeitungszusätzen und Aushärten de Überzugs bei erhöhten Temperaturen, wobei man zunächst die reinen Glasoberflächen mit einer wässrigen oder alkoholischen Silanschlichte behandelt und die Glasflächen gegebenenfalls trocknet, dadurch gekennzeichnet, daß man die mit einer Silanschlichte behandelten Glasflächen anschließend auf eine Temperatur bis zu 120°C erwärmt, die Masse aus 1,2-Epoxidverbindungen auf bekannte Weise auf die so behandelten Glasflächen aufträgt, wobei man als Härter mit cyclischen Amidinen der allgemeinen Formel

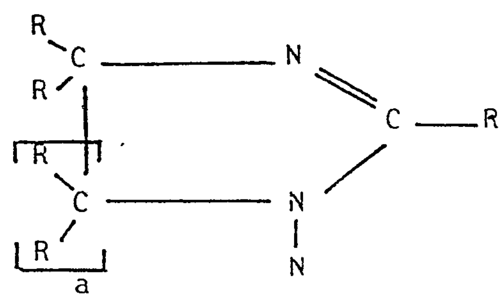

blockierte Polyisocyanate verwendet, worin a 1 oder 2, R gleiche oder verschiedene Substituenten aus der Gruppe Wasserstoff, Alkyl-, Cycloalkyl-, Aralkyl- und Arylrest und gegebenenfalls 2 geminale oder vicinale R's gemeinsam Bestandteil eines un- oder alkylsubstituierten Cycloalkylringes sind, das Härtungsmittel in Mengen von 2—15 Gew.% bezogen auf die Menge an 1,2-Epoxidverbindung, einsetz, und die Überzugsmasse unter weiterer Wärmezufuhr aushärtet.

2. Verfahren zum Beschichten von Glasoberflächen nach Anspruch 1, dadurch gekennzeichnet, daß man als mit cyclischen Amidinen blockiertes Polyisocyanat im Falle der Diisocyanate eines der allgemeinen Formel

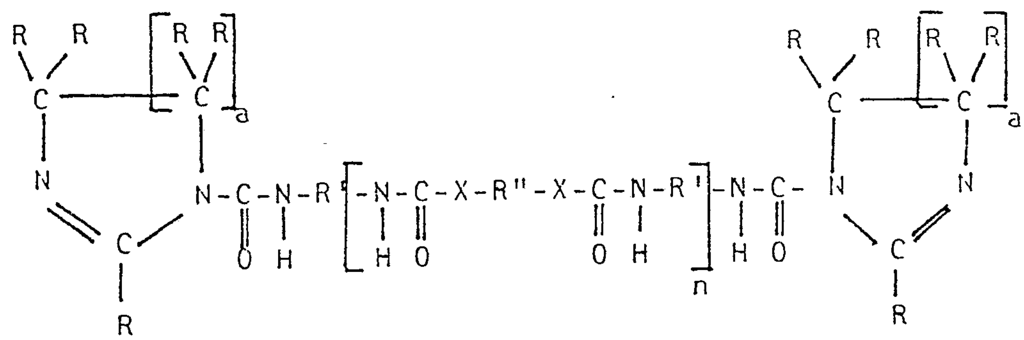

verwendet, worin a und R die vorstehende Bedeutung haben, n 0 oder 1, X O, S oder eine NH-Gruppe, R′ ein gleicher oder verschiedener, gegebenenfalls alkylsubstituierter Alkylen-, Cycloalkylen- oder Arylenrest und R″ ein gegebenenfalls durch einen oder mehrere Alkylreste, wobei mehrere auch gemeinsamer Bestandteil eines cycloaliphatischen Ringes sind, substituierter, gesättigter oder ungesättigiter Alkylenrest mit 2—18 C-Atomen, der gegebenenfalls ein oder mehrer Sauerstoff- oder Schwefelatome in der Kohlenwasserstoffkette enthält, oder ein gegebenenfalls alkylsubstituierter Arylen- oder Cycloalkylenrest ist.

3. Verfahren nach den Ansprüchen 1 oder 2, dadurch gekennzeichnet, daß man die beschichteten Glasoberflächen einer Härtung bei einer Temperatur im Bereich von 120—200°C, vorzugsweise 140—180°C, unterwirft.

4. Verfahren nach den Ansprüchen 1—3, dadurch gekennzeichnet, daß man in den Überzugsmassen lösliche Farbstoffe zusetzt.

5. Verfahren nach den Ansprüchen 1—2, dadurch gekennzeichnet, daß man das Überziehen der Glasoberflächen mit pulverförmigen Überzugsmassen durch Wirbelsintern oder elektrostatisches Wirbelsintern vornimmt.

**Claims**

1. A method for the coating of glass surfaces, especially glass bottles, in order to prevent the scattering of glass particles, with a transparent, duroplastic protective coat by depositing substances of hydroxy group-containing 1,2-epoxy compounds, with at least one 1,2-epoxide group in the molecule and a lower melting point of more than 40°C and hardening agents as well as usual processing additives, and hardening the overlay at higher temperatures, wherein at first the clean glass surfaces are treated with an aqueous or alcoholic silane skim coat and the glass surfaces are dried if necessary; wherein, the glass surfaces treated with a silane skim coat are thereafter warmed to a temperature of up to 120°C, the substance of 1,2-epoxy compounds is coated by a known method on the treated glass surface, wherein one uses as hardening agents polyisocyanates blocked with cyclic amidines of the general formula

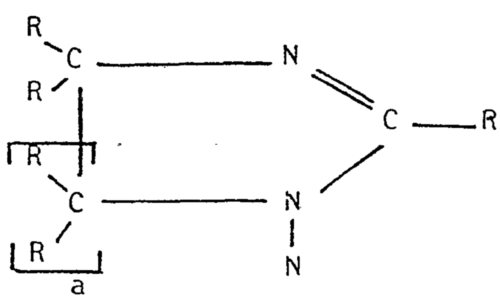

where a can be 1 or 2, R can be equal or different substituents selected from the group of hydrogen, alkyl-, cycloalkyl-, arylalkyl- and aryl, and if necessary, 2 geminal or vicinal $R'_s$ together can be

mutually joined to an unsubstituted or alkylsubstituted cycloalkyl ring, the hardening agent is added in an amount of 2—15% by weight, calculated with respect to the amount of 1,2-epoxide compounds; and, said coating substance is hardened under further addition of heat.

2. A method for the coating of glass surfaces according to Claim 1, wherein one uses as cyclic amidine-blocked polyisocyanate a diisocyanate compound of the general formula

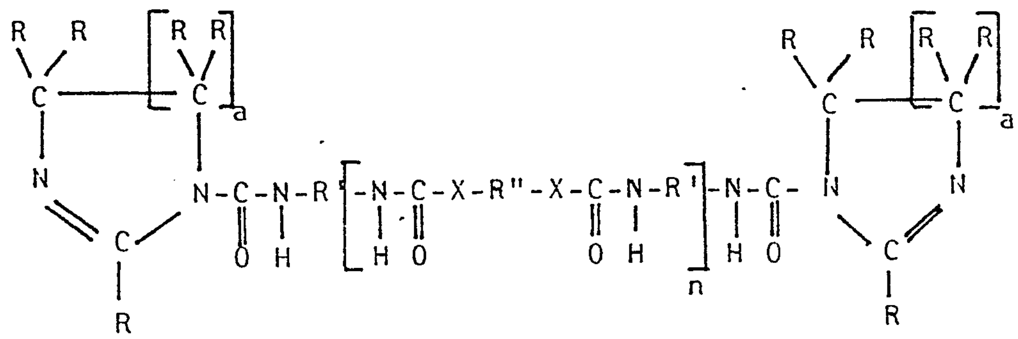

wherein a and R have the aforesaid meaning, n is equal to 0 or 1; X is equal to O, S or a NH-group, R′ can be an equal or different, if necessary, alkylsubstituted alkylene-, cycloalkylene- or arylene radical, and R″ can be, if necessary, substituted by one or more alkyl radicals, whereby more than one radical can mutually join to a cycloaliphatic ring, saturated or unsaturated alkylene radical with 2—18 C-atoms, which if necessary may contain one or more oxygen- or sulfur atoms in the hydrocarbon chain, or R″ is, if necessary, an alkyl-substituted arylene- or cycloalkylene radical.

3. A method according to Claims 1 or 2, wherein the coated glass surface is hardened at a temperature in the range of 120—200°C, preferably 140—180°C.

4. A method according to Claims 1—3, wherein soluble dyes are added into the coating substances.

5. A method according to Claims 1—2, wherein coating of the glass surfaces is carried out with powder-forming coating substances by vortex-sintering or electrostatic vortex sintering.

## Revendications

1. Procédé de couchage de surfaces de verre, en particulier de bouteilles de verre, en vue d'empêcher la dispersion de particules de verre, au moyen d'une couche protectrice duroplaste transparente, par l'application de masses de composés 1,2-époxy contenant des groupes hydroxyle et ayant au moins un groupe 1,2-époxy dans la molécule et avec un point de fusion commencante inférieur qui dépasse 40°C, ainsi que des durcissants et des additifs de travail, avec durcissement complet du revêtement à des températures élevées, en traitant tout d'abord les surfaces de verre propres avec une colle silanique aqueuse ou alcoolique et en séchant éventuellement les surfaces de verre, caractérisé en ce qu'on chauffe ensuite les surfaces de verre traitées avec une colle silanique à une température allant jusqu'à 120°C, on applique la masse de composés 1,2-époxy de manière connue sur les surfaces de verre ainsi traitées, en utilisant comme durcissant des polyisocyanates bloqués avec des amidines cycliques de formule générale

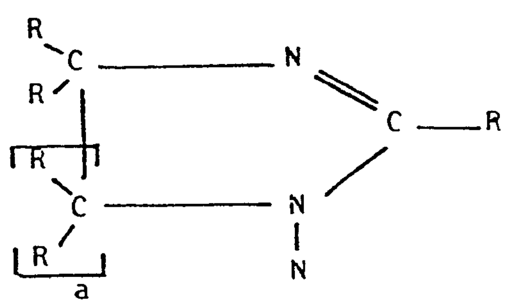

dans laquelle a est 1 ou 2, les R sont des substituants identiques ou différents appartenant au groupe hydrogéne, radical alcoyle, cycloalcoyle, aralcoyle et aryle, éventuellement 2 R géminaux ou vicinaux étant ensemble un constituant d'un noyau cycloalcoyle non substitué ou alcoyl-substitué, en utilisant l'agent durcissant en des quantités de 2 à 15 % en poids par rapport à la quantité de composé 1,2-époxy et en durcissant à fond la masse de revêtement avec un apport supplémentaire de chaleur.

2. Procédé de couchage de surfaces de verre selon la revendication 1, caractérisé en ce qu'en tant que polyisocyanate bloqué avec des amidines cycliques, dans le cas de diisocyanates, on en utilise un qui répond à la formule générale

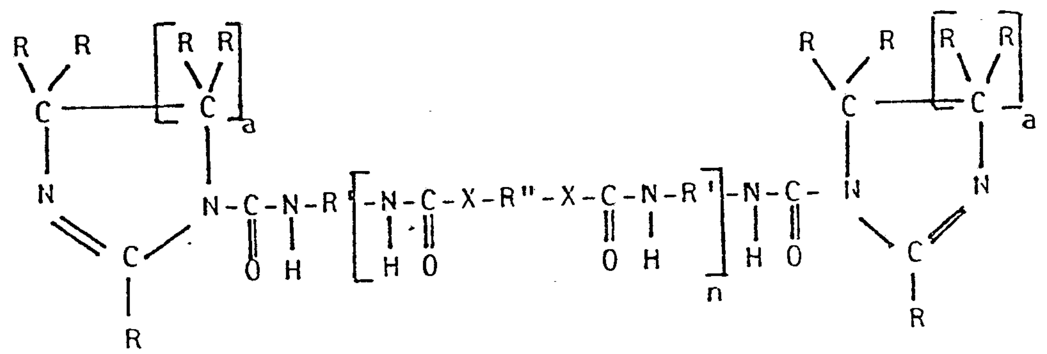

où a et R ont la signification qui précedé, n est 0 ou 1, X est O, S ou un groupe NH, les R' sont un radical alcoylène, cycloalcoylène ou arylène identique ou différent, éventuellement alcoyl-substitué et R'' est un radical alcoylène ayant 2 à 18 atomes de carbone, saturé ou insaturé, éventuellement substitué par un ou plusieurs radicaux alcoyle, plusieurs de ceux-ci formant aussi un constituant commun d'un noyau cycloaliphatique, R'' contenant éventuellement un ou plusieurs atomes d'oxygène ou de soufre sur la chaîne hydrocarbonée, ou bien étant un radical arylène ou cycloalcoylène éventuellement alcoyl-substitué.

3. Procédé selon les revendications 1 ou 2, caractérisé en ce qu'on soumet les surfaces de verre enduites à un durcissement à une température dans l'intervalle de 120—200°C, de préférence de 140—180°C.

4. Procédé selon les revendications 1 à 3, caractérisé en ce qu'on ajoute des colorants solubles dans les masses de couchage.

5. Procédé selon les revendications 1 et 2, caractérisé en ce qu'on effectue l'enduction des surfaces de verre avec des masses de revêtement pulvérulentes par frittage fluidisé ou par frittage fluidisé electrostatique.